(19) Europäisches Patentamt
European Patent Office
Office européen des brevets

(11) Veröffentlichungsnummer: **0 407 888 B1**

# (12) EUROPÄISCHE PATENTSCHRIFT

(45) Veröffentlichungstag der Patentschrift: **09.03.94**

(51) Int. Cl.[5]: **A01N 43/90**, C07D 487/04, //(C07D487/04,253:00,239:00)

(21) Anmeldenummer: **90112821.5**

(22) Anmeldetag: **05.07.90**

## (54) Pyrimido(5,4-e)-as-triazin-5,7(6H,8H)-dione zur Bekämpfung unerwünschten Pflanzenwuchses.

(30) Priorität: **14.07.89 DE 3923226**
**27.07.89 DE 3924845**

(43) Veröffentlichungstag der Anmeldung:
**16.01.91 Patentblatt 91/03**

(45) Bekanntmachung des Hinweises auf die Patenterteilung:
**09.03.94 Patentblatt 94/10**

(84) Benannte Vertragsstaaten:
**BE CH DE FR GB IT LI NL**

(56) Entgegenhaltungen:
**DE-A- 2 901 537**
**US-A- 4 494 981**

**CHEMISCHE BERICHTE, 105. Jahrgang, 1972; G. BLANKENHORN et al., Seiten 3334-3345***

**THE JOURNAL OF ORGANIC CHEMISTRY, Band 40, 1975; E.C. TAYLOR et al., Seiten 2321-2329***

**JOURNAL OF HETEROCYCLIC CHEMISTRY, Band 19, 1982; S. NISHIGAKI et al., Seiten 1309-1312***

(73) Patentinhaber: **BASF Aktiengesellschaft**
**Carl-Bosch-Strasse 38**
**D-67063 Ludwigshafen(DE)**

(72) Erfinder: **Meyer, Norbert, Dr.**
**Dossenheimer Weg 22**
**D-6802 Ladenburg(DE)**
Erfinder: **Schirmer, Ulrich, Dr.**
**Berghalde 79**
**D-6900 Heidelberg(DE)**
Erfinder: **Plath, Peter, Dr.**
**Hans Balcke-Strasse 13**
**D-6710 Frankenthal(DE)**
Erfinder: **Wuerzer, Bruno, Dr.**
**Ruedigerstrasse 13**
**D-6701 Otterstadt(DE)**
Erfinder: **Westphalen, Karl-Otto, Dr.**
**Mausbergweg 58**
**D-6720 Speyer(DE)**
Erfinder: **Pfleiderer, Wolfgang, Prof. Dr.**
**Lindauerstrasse 47**
**D-7750 Konstanz(DE)**
Erfinder: **Werner-Simon,Susanne**
**Schwaketenstrasse 104**
**D-7750 Konstanz(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**CHEMICAL ABSTRACTS, Band 79, Nr. 25, 24 Dezember 1973, Columbus, OH (US); F. YONEDA et al., Seite 331, Nr. 146559s***

**ULLMANNS ENCYKLOPÄDIE DER TECHNISCHEN CHEMIE, 4. Auflage, Band 12,1976, Verlag Chemie, Weinheim (DE); Seiten 612-613***

## Beschreibung

Die vorliegende Erfindung betrifft ein Verfahren zur Bekämpfung unerwünschten Pflanzenwuchses, das dadurch gekennzeichnet ist, daß man herbizide Mittel, enthaltend als Wirkstoff ein Pyrimido[5,4-e]-as-triazin-5,7(6H,8H)-dion der Formel Ia

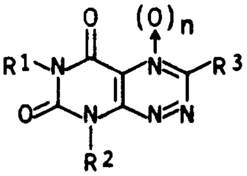

(Ia) ,

in der die Variablen folgende Bedeutung haben,

$R^1$, $R^2$

- Wasserstoff, $C_1$-$C_6$-Alkylgruppen, $C_3$-$C_6$-Cycloalkylgruppen, $C_2$-$C_8$-Alkenylgruppen, die Phenyl- oder die Benzylgruppe;

$R^3$

- Wasserstoff, Halogen, die Nitrogruppe, eine $C_1$-$C_8$-Alkylgruppe, die bis zu drei der folgenden Substituenten tragen kann:
  Halogen, Hydroxyl, $C_1$-$C_6$-Alkoxy, $C_1$-$C_6$-Alkyl, $C_1$-$C_4$-Alkoxy-$C_1$-$C_4$-alkoxy, $C_2$-$C_6$-Alkenyl,
  $C_1$-$C_6$-Alkylthio, Phenyl, Benzyl;
- eine $C_2$-$C_6$-Alkenyl- oder Phenylalkenylgruppe;
- eine $C_3$-$C_6$-Cycloalkylgruppe, die bis zu 3 $C_1$-$C_4$-Alkylgruppen als Substituenten tragen kann;
- einen 5- oder 6-gliedrigen C-organischen Heterocyclus, bei dem insgesamt bis zu zwei der Ringglieder, die nicht benachbart sein sollen, -O-, -S- oder -N($R^4$)- sein können, wobei $R^4$ für Wasserstoff oder eine $C_1$-$C_6$-Alkylgruppe steht;
- eine Gruppe -CO-$R^4$ oder -CO-O-$R^4$;
- die Phenylgruppe oder einen einkernigen Heteroarylrest, wobei diese Gruppen bis zu drei der folgenden Substituenten enthalten können: Halogen, Nitro, $C_1$-$C_6$-Alkyl,
  $C_2$-$C_6$-Alkenyl, $C_1$-$C_6$-Alkoxy oder eine Aminogruppe -$NR^4R^5$, wobei $R^5$ für einen der Reste $R^4$ steht;
- eine Gruppe -$ZR^6$, wobei Z für Sauerstoff, Schwefel oder die Gruppierung -N($R^7$)-steht und in der $R^6$ Wasserstoff, eine $C_1$-$C_6$-Alkylgruppe oder eine Phenyl- oder Benzylgruppe bedeutet, die bis zu drei der folgenden Substituenten am Kern tragen können:
  $C_1$-$C_6$-Alkyl, $C_1$-$C_6$-Alkoxy oder Halogen,
  und wobei
  $R^7$ Wasserstoff oder eine $C_1$-$C_6$-Alkylgruppe bedeutet, wobei $R^6$ und $R^7$ auch mit dem Stickstoffatom einen 5- oder 6-gliedrigen Ring bilden können, der durch Sauerstoff unterbrochen sein kann;

n 0 oder 1,

oder ein mineralsaures Salz von Ia mit Säuren, welche die herbizide Wirkung von Ia nicht beeinträchtigen, auf Pflanzen, deren Lebensraum oder auf Saatgut einwirken läßt.

Bevorzugt können Pyrimido[5,4-e]-as-triazin-5,7-(6H,8H)-dion-Derivate der Formel Ib

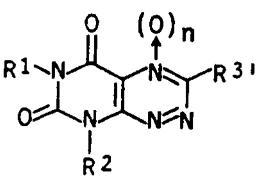

(Ib) ,

in der

$R^{3'}$ eine der folgenden Bedeutungen hat:

- eine $C_1$-$C_8$-Alkylgruppe mit einem bis zwei der folgenden Substituenten: Halogen, Hydroxy, $C_1$-$C_6$-Alkoxy, $C_1$-$C_4$-Alkoxy-$C_1$-$C_4$-alkoxy, $C_1$-$C_6$-Alkylthio,

- eine $C_3$-$C_6$-Cycloalkylgruppe, die bis zu 3 $C_1$-$C_4$-Alkylgruppen als Substituenten tragen kann;
- einen 5- oder 6-gliedrigen gesättigten Heterocyclus mit der Gruppierung -N($R^4$)- als Heterogruppierung, wobei $R^4$ für eine $C_1$-$C_6$-Alkylgruppe steht, oder mit zwei nicht benachbarten Heteroatomen, die Sauerstoff, Schwefel oder die Gruppierung -N($R^4$)-sein können;
- eine Gruppe -CO-$R^4$ oder -CO-O-$R^4$;
- einen einkernigen Heteroarylrest, der einen bis drei oder folgenden Substituenten enthält, Halogen, Nitro, $C_1$-$C_6$-Alkyl,
  $C_2$-$C_6$-Alkenyl, $C_1$-$C_6$-Alkoxy oder eine Aminogruppe -$NR^4R^5$, wobei $R^5$ für einen der Reste $R^4$ steht;
- eine $C_2$-$C_6$-Alkoxygruppe;
- eine Gruppe -$ZR^6$, wobei Z für Sauerstoff, Schwefel oder die Gruppierung -N($R^7$)- steht und in der $R^6$ Wasserstoff, eine $C_2$-$C_6$-Alkylgruppe oder eine Phenyl- oder Benzylgruppe bedeutet, die jede bis zu drei der folgenden Substituenten am Kern tragen kann:
  $C_1$-$C_6$-Alkyl, $C_1$-$C_6$-Alkoxy oder Halogen,
  und wobei $R^7$ eine $C_1$-$C_6$-Alkylgruppe bedeutet, und
  $R^6$ und $R^7$ auch mit dem Stickstoffatom einen 5- oder 6-gliedrigen Ring bilden können, der noch durch Sauerstoff unterbrochen sein kann,

sowie die Salze von Ib mit solchen Säuren, welche die herbizide Wirkung von Ib nicht beeinträchtigen, für das Verfahren verwendet werden.

Aus den Arbeiten von K. Senga et al (Heterocyclus, Band 6, 1977, Seite 1921 f. und J. Heterocycl. Chem., Band 19, 1982, Seite 1309 f.) sind Verbindungen vom Typ Ia bekannt, die in 6- und 8-Stellung eine Methylgruppe tragen und in 3-Stellung unsubstituiert sind oder eine Anilinogruppe oder eine substituierte Phenylgruppe tragen.

Aus der JA-A 73 25 200 sind Verbindungen vom Typ Ia bekannt, die in 6- und 8-Stellung Wasserstoff, einen Kohlenwasserstoff-Rest oder einen Aminrest tragen und in 3-Stellung unsubstituiert sind oder eine Kohlenwasserstoffgruppe oder einen aromatischen Rest tragen.

Diesen Verbindungen und ihren Säureadditionssalzen werden in der genannten Literatur anti-microbe, fungizide und antivirale Eigenschaften zugeschrieben. Eine herbizide Wirkung dieser Verbindungen ist jedoch nicht bekannt.

Der Erfindung lag die Aufgabe zugrunde, ein Verfahren zur Bekämpfung unerwünschten Pflanzenwuchses zur Verfügung zu stellen.

Demgemäß wurde das eingangs definierte Verfahren gefunden.

Bevorzugte Verbindungen Ia in dem erfindungsgemäßen Verfahren sind solche, in denen die Substituenten folgende Bedeutung haben:

$R^1$, $R^2$

- Wasserstoff, unverzweigte oder verzweigte $C_1$-$C_6$-Alkylgruppen, insbesondere $C_1$-$C_4$-Alkylgruppen wie Methyl, Ethyl, n-Propyl, iso-Propyl und Butyl, eine $C_3$-$C_6$-Cycloalkylgruppe, insbesondere Cyclopropyl und Cyclohexyl, $C_2$-$C_8$-Alkenylgruppen, insbesondere Vinyl und Alkyl, eine Phenyl oder eine Benzylgruppe;

$R^3$

- Wasserstoff, Halogen, insbesondere Chlor und Brom, eine Nitrogruppe;
- eine unverzweigte oder verzweigte $C_1$-$C_8$-Alkylgruppe, insbesondere eine $C_1$-$C_4$-Alkylgruppe, die bis zu 3 der folgenden Substituenten tragen kann: Halogen wie Fluor, Chlor oder Brom, Hydroxyl, $C_1$-$C_6$-Alkoxy wie Methoxy und Ethoxy, $C_1$-$C_6$-Alkyl wie Methyl, Ethyl, n-Propyl, Isopropyl und tert.-Butyl, $C_1$-$C_4$-Alkoxy-$C_1$-$C_4$-alkoxy wie Methoxymethoxy, 2-Methoxy-ethoxy und tert.-Butoxy-methoxy, $C_2$-$C_6$-Alkenyl wie Ethenyl, 2-Propenyl, 2-Butenyl und 3-Butenyl, $C_1$-$C_6$-Alkylthio wie Methylthio, Ethylthio und tert.-Butylthio, Phenyl und/oder Benzyl; besonders bevorzugt sind Methyl, Ethyl, n-Propyl, iso-Propyl, 1-(2-Methyl)propyl, n-Butyl, tert.-Butyl und 1-(3,3-Dimethyl)butyl, Dibrommethyl, Trichlormethyl, Methoxymethyl, 1-(1-Methoxy)ethyl, 2-Methoxyethyl, 1-(1-Hydroxy)ethyl, 2-(Methylthio)ethyl, 1-Methyl(2,5-dioxa)hexyl, 2-Phenethyl und 1,2-Dibromphenethyl;
- eine $C_2$-$C_6$-Alkenyl- oder Phenylalkenylgruppe, insbesondere Allyl, 2-(2-Butenyl) und Styryl;
- eine $C_3$-$C_6$-Cycloalkylgruppe, die bis zu 3 $C_1$-$C_4$-Alkylgruppen als Substituenten tragen kann, insbesondere Cyclopropyl, Cyclopentyl und Cyclohexyl, einen 5- oder 6-gliedrigen gesättigten Heterocyclus, insbesondere 4-Tetrahydropyranyl und 3-Tetrahydrothiopyranyl;

- eine Acetylgruppe, eine Methoxycarbonyl-, Ethoxycarbonyl- oder Butoxycarbonylgruppe;
- die Phenylgruppe oder ein einkerniger Heteroarylrest, wobei diese Gruppen bis zu drei der folgenden Substituenten enthalten können: Halogen wie Fluor, Chlor und Brom, Nitro, $C_1$-$C_6$-Alkyl wie Methyl, Ethyl und tert.-Butyl, $C_2$-$C_6$-Alkenyl wie Ethenyl, 2-Propenyl und 2-Butenyl, $C_1$-$C_6$-Alkoxy wie Methoxy, Ethoxy und tert.-Butoxy, Amino, $C_1$-$C_6$-Alkylamino wie Methylamino und Ethylamino oder Di-($C_1$-$C_6$)-alkylamino wie Dimethylamino; besonders bevorzugt sind Phenyl, 4-Chlorphenyl, 4-Nitrophenyl, 4-(Dimethylamino)phenyl, 2-Pyridyl, 3-Pyridyl, 3-Pyridyl•HCl, 4-Pyridyl, 2-Thienyl, 3-Thienyl, 4-(1-Ethyl)pyrazolyl, 5-(3-Methyl)isoxazolyl, 5-(3-(2-Propyl))isoxazolyl, 5-(3-Propyl)isoxazolyl und 5-(3-Butyl)isoxazolyl;
- einen über Sauerstoff, Schwefel oder Stickstoff verbrückten Rest, insbesondere Methoxy, Ethoxy, Phenoxy, 4-Chlorphenoxy, Benzyloxy, 4-Chlorbenzyloxy, Methylthio, Phenylthio, Isopropylamino, N,N-Diethylamino, Anilino, 4-Chloranilino, N-Methylanilino, Pyrrolidino und N-Morpholino.

Bevorzugt verwendete Pyrimido[5,4-e]-as-triazin-5,7(6H,8H)-dione der Formel Ib sind in Tabelle 1 unter den Beispielen aufgeführt.

Als Säureadditionssalze eignen sich die Salze von solchen Säuren, welche die herbizide Wirkung der Verbindungen Ia nicht beeinträchtigen, also z.B. die Hydrochloride und -bromide, Sulfate, Nitrate, Phosphate, Oxalate oder die Dodecylbenzolsulfonate.

Die 3,6,8 substituierten Pyrimido[5,4-e]-as-triazin-5,7(6H,8H)-dione Ia sind bekannt oder (im Falle Ib) in an sich bekannter Weise erhältlich. In den Fällen, in denen $R^3$ bzw. $R^{3'}$ nicht -$ZR^6$ oder Halogen bedeutet und n = 0 ist, kann man die Verbindungen nach folgendem Schema herstellen.

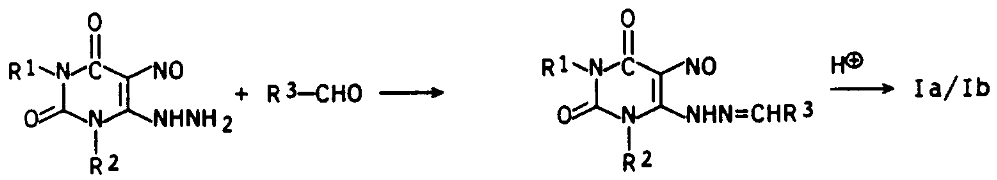


Diese Reaktion ist z.B. aus den Arbeiten von G. Blankenhorn und W. Pfleiderer (Chem. Ber., Band 105, 1972, Seite 3334 f.) und K. Senga et al (Heterocyclus, Band 6, 1977, Seite 1921 f.) bekannt. Die Synthese der Hydrazone wird in bekannter Weise (vgl. Houben-Weyl, Methoden der Organischen Chemie, Band VII.1, S. 461 ff.) durchgeführt.

Vorzugsweise führt man die Herstellung der Hydrazone und deren Cyclisierung in Alkoholen wie Ethanol mit einer katalytischen Menge einer Mineralsäure wie Salzsäure oder Schwefelsäure bei der Siedetemperatur des Lösungsmittels durch. Bevorzugt werden stöchiometrische Mengen oder ein geringer überschuß des Aldehyds eingesetzt. Im allgemeinen arbeitet man bei Atmosphärendruck oder unter dem Eigendruck des jeweiligen Lösungsmittels, sofern sich nicht wegen leichtflüchtiger Reaktionspartner ein höherer Druck, etwa bis zu 5 bar, empfiehlt.

Bei der Herstellung von Verbindungen der Formel Ia können als Nebenprodukte die jeweiligen N-Oxide (n = 1) anfallen. Diese lassen sich auch gezielt nach bekannten Verfahren synthetisieren (z.B. K. Senga et al, J. Org. Chem., Band 43, 1978, Seite 469 ff.).

Die Herstellung der Pyrimido[5,4-e]-as-triazin-5,7(6H,8H)-dione der Formel Ia (n = 0) oder Ib mit Ausnahme von $R^3$ und $R^{3'}$ = $ZR^6$ oder Halogen kann auch dadurch erfolgen, daß man nach bekannten Verfahren (z.B. W. Pfleiderer und G. Blankenhorn, THL, 1969, S. 4699 ff.) aus 4-Hydrazinuracilen der Formel IIa die entsprechenden Hydrazone IIb synthetisiert und anschließend zwischen 20 °C und dem Siedepunkt des Lösungsmittels nitrosiert. Dabei erfolgt eine spontane Cyclisierung zu den Verbindungen Ia-(n = 0) oder Ib.

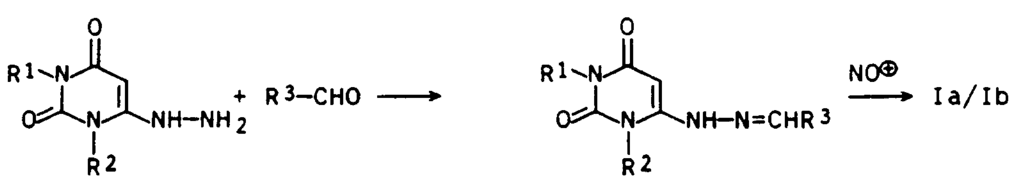


IIa IIb

Hydrazin Va und Aldehyd werden bevorzugt in stöchiometrischen Mengen oder mit einem leichten überschuß an Aldehyd umgesetzt.

Die Nitrosierung wird vorzugsweise mit einem organischen Nitrit wie Amyl- oder Isoamylnitrit oder mit einem anorganischen Nitrit wie Natrium- oder Kaliumnitrit durchgeführt.

Als Lösungsmittel empfehlen sich polare Solventien wie niedere Alkohole oder Wasser, vorteilhaft mit der katalytischen Menge einer Säure wie Salzsäure oder Schwefelsäure.

Auch bei dieser Umsetzung arbeitet man bevorzugt unter Atmosphärendruck.

Verbindungen der Formel Ia und Ib, in der $R^1$ oder $R^2$ Wasserstoff bedeutet und $R^3$ bzw. $R^{3'}$ nicht $ZR^6$ oder Halogen bedeutet, sind auch durch Debenzylierung der entsprechenden Verbindungen Ia bzw. Ib ($R^1$ oder $R^2$ = Benzyl) mit Wasserstoff in Anwesenheit eines Hydrierkatalysators, wie Palladium/Kohle, erhältlich.

Verbindungen der Formel Ia oder Ib mit $R^3$ bzw. $R^{3'}$ = Halogen können durch Umsetzung von Pyrimido[5,4-e]-as-triazin-5,7(6H,8H)-dionen mit z.B. $POCl_3$ und Diethylanilin als Hilfsbase erhalten werden (z.B. E.C. Taylor and F. Sowinski, JOC, Band 40, 1975, S. 2321 ff.).

Die Synthese der Verbindungen Ia oder Ib mit $R^3$ und $R^{3'}$ = $-ZR^6$ erfolgt durch Umsetzung des entsprechenden Chlorderivates ($R^3$ und $R^{3'}$ = Chlor) mit Nukleophilen der Formel $H-ZR^6$ oder $H-N(R^6R^7)$ in einem inertem Lösungsmittel (z.B. K. Senga, J. Heterocycl. Chem., Band 19, 1982, S. 1309 ff.).

Als Solventien eignen sich Ether wie Dioxan oder Tetrahydrofuran oder vorteilhaft der entsprechende Alkohol $HO-R^6$ im Überschuß. Wenn Z Schwefel oder $-NR^7$ bedeutet, können Ether oder niedere Alkohole wie Methanol oder i-Propanol, Ester wie Acetonitril oder Amide wie Dimethylformamid verwendet werden. Bevorzugt arbeitet man in Tetrahydrofuran.

Als Hilfsbase dient entweder das Salz des Alkohols bzw. Thiols $H-Z-R^6$ oder überschüssiges Amin $H-NR^6R^7$ oder ein tertiäres Amin wie Triethylamin, N-Methylpiperidin oder N-Methylmorpholin.

Die Verbindung $H-ZR^6$ und die Hilfsbase werden vorteilhaft in einer mindestens äquimolaren Menge, bevorzugt in ca. 10 %igem Überschuß, bezogen auf das Chlorderivat ($R^3$ bzw. $R^{3'}$ = Cl), eingesetzt. Die Umsetzung erfolgt vorteilhaft bei Temperaturen von 0 bis 100 °C, bevorzugt im Bereich zwischen 40 und 80 °C.

Bezüglich des Druckes gelten die obigen Angaben für die Herstellung der Verbindung Ia bzw. Ib, bei denen $R^3$ bzw. $R^{3'}$ nicht $-ZR^6$ oder Halogen bedeutet und n = 0 ist.

Herstellungsbeispiele

Beispiel 1

3-(3-Tetrahydrothiopyranyl)-6,8-dimethyl-pyrimido[5,4-e]-as-triazin-5,7(6H,8H)-dion

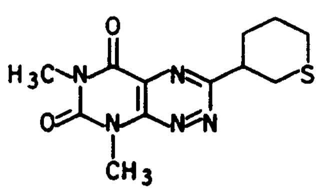

3 g (0,015 mol) 5-Nitroso-4-hydrazino-1,3-dimethyluracil in 100 ml Ethanol wurden mit 2,6 g (0,02 mol) Tetrahydrothiopyran-3-aldehyd und 2 Tropfen konz. Salzsäure versetzt. Nach 3-stündigem Erhitzen bei Rückflußtemperatur wurde das Lösungsmittel entfernt und der Rückstand in Ethylacetat aufgenommen. Diese Lösung wurde über Kieselgel filtriert und wieder eingeengt. Das so erhaltene Produkt wurde sodann aus Diethylether umkristallisiert.

Ausbeute: 66 %; FP.: 134 - 138 °C .

Beispiel 2

3-(4-Morpholino)-6,8-dimethyl-pyrimido[5,4-e]-as-triazin-5,7(6H,8H)-dione

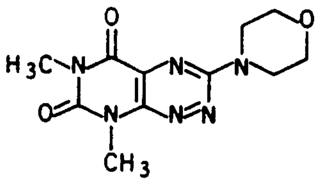

Zu einer Suspension von 2,3 g (0,01 mol) 3-Chlor-6,8-dimethylpyrimido[5,4-e]-as-triazin-5,7(6H,8H)-dion (3-Chlorfervenulin) in 70 ml Tetrahydrofuran wurden 1,75 g (0,02 mol) Morpholin gegeben. Nach 30-minütigem Erhitzen auf 70 °C wurde die Mischung im Vakuum eingeengt und der Rückstand mit Wasser verrührt, abfiltriert und aus Isopropanol umkristallisiert.
Ausbeute: 70 %; Fp.: 180 - 182 °C
Analog den Beispielen 1 und 2 wurden die in den Tabellen 1 und 2 aufgeführten Verbindungen hergestellt.

Tabelle 1

Herbizide Pyrimido[5,4-e]-as-triazin-5,7(6H,8H)-dione Ib

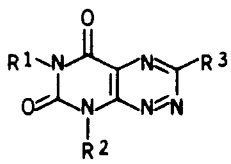

| Bsp. | $R^1$ | $R^2$ | $R^3$ | Fp./NMR-Daten (δ[ppm], Multiplizität, Integral) |
|---|---|---|---|---|
| 1 | Methyl | Methyl | Tetrahydrothiopyran-3-yl | 134-138°C |
| 2 | " | " | N-Morpholinyl | 180-182°C |
| 3 | " | " | Dibrommethyl | 198-200°C (Zers.) |
| 4 | " | " | Acetyl | 152-153°C (Zers.) |
| 5 | " | " | 1-(1-Hydroxy)ethyl | 154-157°C |
| 6 | " | " | 1,2-Dibromphenethyl | 201°C |
| 7 | " | " | 4-Tetrahydropyranyl | 155-158°C |
| 8 | " | " | Cyclohexyl | 183-187°C |
| 9 | " | " | Cyclopentyl | 156-157°C |
| 10 | " | " | 2-(2-Butenyl) | 181-184°C |
| 11 | " | " | 1-(1-Methoxyethyl) | 125-128°C |
| 12 | " | " | Methoxymethyl | 3,5(s,3H); 3,55(s,3H); 3,9(s,3H); 5,0(s,2H) |
| 13 | " | " | Methoxyethyl | 3,4(s,3H); 3,6(s,3H); 3,9(s,3H); 4,05(t,2H); |
| 14 | " | " | Methylthioethyl | 86-90°C |
| 15 | " | " | 1-Methyl-(2,5-dioxa)hexyl | 59-62°C |
| 16 | " | " | 5-(3-Butyl)isoxazolyl | 123-126°C |
| 17 | " | " | 4-(1-Ethyl)pyrazolyl | 215-217°C |
| 18 | " | " | 5-(3-Propyl)isoxazolyl | 159-161°C |
| 19 | " | " | 5-(3-(2-Propyl)isoxazolyl | 123-126°C |
| 20 | " | " | 5-(3-Methyl)isoxazolyl | >200°C (Zers.) |
| 21 | " | Allyl | 3-Tetrahydrothiopyranyl | 105-109°C |
| 22 | " | Propyl | 3-Tetrahydrothiopyranyl | 101-103°C |

| Bsp. | $R^1$ | $R^2$ | $R^3$ | Fp./NMR-Daten (δ[ppm], Multiplizität, Integral) |
|---|---|---|---|---|
| 23 | Methyl | Allyl | 4-Tetrahydropyranyl | 3,4-3,7(m,1H,2H,mit s,3H); 4,1-4,2 (m,2H); 5,1 (d,2H) |
| 24 | " | Propyl | 4-Tetrahydropyranyl | 90-93°C |
| 25 | " | Allyl | Cyclohexyl | 68-71°C |
| 26 | " | Propyl | " | 1,0(t,3H); 1,1-2,1(m,10H); |
| 27 | " | Allyl | Methylthioethyl | 2,2(s,3H); 3,1(t,3H); 3,6(s,3H); 5,1(d,2H) |
| 28 | " | Propyl | Methylthioethyl | 1,0(t,3H); 2,2(s,3H); 3,1(t,2H); 3,6(s,3H); 4,5(t,2H) |
| 29 | " | Methyl | Methoxycarbonyl | 151-155°C |
| 30 | " | " | Ethoxycarbonyl | 1,5(t,3H); 3,6(s,3H); 4,0(s,3H); 4,6(q,2H) |
| 31 | " | " | Butoxycarbonyl | 1,0(t,3H); 1,4-1,6 |
| 32 | Propyl | Propyl | Cyclohexyl | 3,3(m,1H); 4,1(t,2H); 4,5(t,2H) |
| 33 | 2-Propyl | 2-Propyl | " | 3,3(m,1H); 5,3(m,1H); 5,8(m,1H) |
| 34 | Ethyl | Ethyl | " | 3,3(m,1H); 4,2(m,2H); 4,6(m,2H) |
| 35 | Methyl | Methyl | Cyclopropyl | 131-133°C |
| 36 | " | Propyl | " | 54-57°C |
| 37 | " | Allyl | " | 1,2-1,4(m,4H); 2,6(m,1H); 3,5(s,3H); 5,1(d,2H) |
| 38 | Ethyl | Ethyl | " | 137-139 |
| 39 | Methyl | Methyl | Pyrrolidino | |

Tabelle 2

Herbizide Pyrimido[5,4-e]-as-triazin-5,7(6H,8H)-dione Ia

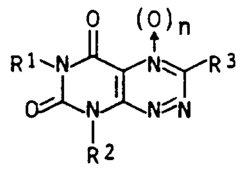

| Bsp. | $R^1$ | $R^2$ | $R^3$ | n | Fp./NMR-Daten (δ[ppm], Multiplizität, Integral) |
|---|---|---|---|---|---|
| 40 | Methyl | Methyl | Methyl | 0 | 181-182°C |
| 41 | " | " | H | 0 | 178-179°C |
| 42 | " | " | Phenyl | 0 | 270°C |
| 43 | " | " | 4-Chlorphenyl | 0 | 275°C |
| 44 | " | " | 4-Nitrophenyl | 0 | 323°C |
| 45 | " | " | 2-Propyl | 0 | 158-159°C |
| 46 | " | " | 4-(Dimethylamino)phenyl | 0 | 340°C (Zers.) |
| 47 | " | " | Trichlormethyl | 0 | 194°C |
| 48 | " | " | Ethyl | 0 | 95°C |
| 49 | " | " | tert.-Butyl | 0 | 198-199°C |
| 50 | " | " | Chlor | 0 | 147°C |
| 51 | " | " | H | 1 | 179-180°C |
| 52 | Methyl | Ethyl | Methyl | 0 | 132-133°C |
| 53 | Methyl | Ethyl | 2-Propyl | 0 | 107-109°C |
| 54 | Ethyl | Methyl | Methyl | 0 | 115-117°C |
| 55 | Ethyl | Methyl | 2-Propyl | 0 | 76-78°C |
| 56 | Benzyl | Methyl | Methyl | 0 | >177°C (Zers.) |
| 57 | Benzyl | Methyl | 2-Propyl | 0 | 135-137°C |
| 58 | Methyl | Benzyl | Methyl | 0 | 213-217°C |
| 59 | Methyl | Benzyl | 2-Propyl | 0 | 198-200°C |
| 60 | Allyl | Methyl | Methyl | 0 | 3,0(s,3H); 3,9(s,3H); 4,7(d,2H) |
| 61 | Allyl | Methyl | 2-Propyl | 0 | 1,5(d,6H); 3,6(q,1H); 3,9(s,3H); 4,7(d,2H) |
| 62 | Methyl | Allyl | Methyl | 0 | 125-127°C |
| 63 | Methyl | Allyl | 2-Propyl | 0 | 93-95°C |
| 64 | Methyl | Propyl | 2-Propyl | 0 | 52-53°C |
| 65 | Methyl | Propyl | Methyl | 0 | 104-106°C |

| Bsp. | $R^1$ | $R^2$ | $R^3$ | n | Fp./NMR-Daten (δ[ppm], Multiplizität, Integral) |
|---|---|---|---|---|---|
| 66 | Methyl | 2-Propyl | Methyl | 0 | 112-114°C |
| 67 | 2-Propyl | Methyl | Methyl | 0 | 135-137°C |
| 68 | Methyl | Methyl | Benzyl | 0 | 180-182°C |
| 69 | Methyl | Methyl | Styryl | 0 | 263°C |
| 70 | Methyl | Methyl | 1-(3,3-Dimethyl)butyl | 0 | 134-136°C |
| 71 | Methyl | Methyl | 1-(2-Methyl)propyl | 0 | 86-90°C |
| 72 | Cyclo-hexyl | Methyl | Methyl | 0 | 135-138°C |
| 73 | " | Methyl | 2-Propyl | 0 | 103-106°C |
| 74 | Methyl | H | Methyl | 0 | 168-174°C |
| 75 | Methyl | Methyl | 2-Pyridyl | 0 | 266-269°C |
| 76 | Methyl | Methyl | 3-Pyridyl | 0 | 121-125°C |
| 77 | Methyl | Methyl | 4-Pyridyl | 0 | 269-271°C |
| 78 | Methyl | Methyl | 2-Thienyl | 0 | 285-288°C |
| 79 | Methyl | Methyl | 3-Thienyl | 0 | 311-325°C |
| 80 | Methyl | H | 2-Propyl | 0 | 185-188°C |
| 81 | Methyl | Methyl | 2-Propyl | 1 | 172-174°C |
| 82 | Methyl | Allyl | Ethyl | 0 | 70-73°C |
| 83 | Methyl | Propyl | Ethyl | 0 | 79-82°C |
| 84 | Methyl | Allyl | 1-(2-Methyl)propyl | 0 | 76-79°C |
| 85 | Methyl | Propyl | 1-(2-Methyl)propyl | 0 | 35°C |
| 86 | Methyl | Allyl | 3-Pyridyl | 0 | 154-156°C |
| 87 | Methyl | Propyl | 3-Pyridyl | 0 | 159-162°C |
| 88 | Propyl | Propyl | H | 0 | 77-80°C |
| 89 | Propyl | Propyl | Methyl | 0 | 3,0(s,3H); 4,1(t,2H); 4,5(t,2H) |
| 90 | Propyl | Propyl | 2-Propyl | 0 | 3,6(m,1H); 4,1(t,2H); 4,5(t,2H) |
| 91 | Propyl | Propyl | 3-Pyridyl·HCl | 0 | 199-203°C |
| 92 | 2-Propyl | 2-Propyl | H | 0 | 5,3(m,1H); 5,9(m,1H); 9,9(2,1H) |
| 93 | " | " | Methyl | 0 | 3,0(s,3H); 5,3(m,1H); 5,8(m,1H) |
| 94 | " | " | 2-Propyl | 0 | 3,6(m,1H); 5,3(m,1H); 5,8(m,1H) |
| 95 | " | " | 3-Pyridyl | 0 | 191-194°C |
| 96 | Ethyl | Ethyl | Methyl | 0 | 100-103°C |
| 97 | Ethyl | Ethyl | 2-Propyl | 0 | 107-109°C |
| 98 | Ethyl | Ethyl | 3-Pyridyl·HCl | 0 | 239-240°C |

| Bsp. | $R^1$ | $R^2$ | $R^3$ | n | Fp./NMR-Daten (δ[ppm], Multiplizität, Integral) |
|---|---|---|---|---|---|
| 99 | Ethyl | Ethyl | H | 0 | 168-170°C |
| 100 | Methyl | Methyl | Methoxy | 0 | 144-145°C |
| 101 | Methyl | Methyl | Benzyloxy | 0 | 185-187°C |
| 102 | Methyl | Methyl | Phenoxy | 0 | |
| 103 | Methyl | Methyl | 4-Cl-phenoxy | 0 | |
| 104 | Methyl | Methyl | 4-Cl-benzyloxy | 0 | 190-192°C |
| 105 | Methyl | Methyl | Methylthio | 0 | 157-160°C |
| 106 | Methyl | Methyl | Anilino | 0 | 245-248°C |
| 107 | Methyl | Methyl | 4-Chlor-anilino | 0 | 248-250°C |
| 108 | Methyl | Methyl | N-Methylanilino | 0 | |
| 109 | Methyl | Methyl | Isopropylamino | 0 | |
| 110 | Methyl | Methyl | N,N-Diethylamino | 0 | |
| 111 | Ethyl | Ethyl | H | 1 | 165-168°C |

Die Pyrimido [5,4-e]-as-triazin-5,7(6H,8H)-dione Ia bzw. die sie enthaltenden herbiziden Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, verstreuen oder Gießen angewendet werden. Die Anwendungformen richten sich nach den Verwendungszwecken; sie sollten in jedem Fall möglichst die feinste Verteilung der erfindungsgemäßen Wirkstoffe gewährleisten.

Die Verbindungen Ia bzw. Ib eignen sich allgemein zur Herstellung von direkt versprühbaren Lösungen, Emulsionen, Pasten oder Öldispersionen. Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Chlorbenzol, Isophoron oder stark polare Lösungsmittel, wie N,N-Dimethylformamid, Dimethylsulfoxid, N-Methylpyrrolidon oder Wasser in Betracht.

Wäßrige Anwendungsformen können aus Emulsionskonzentraten, Dispersionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit,

Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Formulierungen enthalten zwischen 0,1 und 95 Gew.%, vorzugsweise zwischen 0,5 und 90 Gew.%, Wirkstoff. Die Wirkstoffe werden dabei in einer Reinheit von 90 % bis 100 %, vorzugsweise 95 % bis 100 % (nach NMR-Spektrum) eingesetzt.

Die Verbindungen Ia bzw. Ib können beispielsweise wie folgt formuliert werden:

I. Man vermischt 90 Gewichtsteile der Verbindung Nr. 1 mit 10 Gewichtsteilen N-Methyl-α-pyrrolidon und erhält eine Lösung, die zur Anwendung in Form kleinster Tropfen geeignet ist.

II. 20 Gewichtsteile der Verbindung Nr. 28 werden in einer Mischung gelöst, die aus 80 Gewichtsteilen Xylol, 10 Gewichtsteilen des Anlagerungsproduktes von 8 bis 10 Mol Ethylenoxid an 1 Mol Öl-säure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

III. 20 Gewichtsteile der Verbindung Nr. 3 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

IV. 20 Gewichtsteile des Wirkstoffs Nr. 4 werden in einer Mischung gelöst, die aus 25 Gewichtsteilen Cyclohexanon, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

V. 20 Gewichtsteile des Wirkstoffs Nr. 5 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gew.% des Wirkstoffs enthält.

VI. 3 Gewichtsteile des Wirkstoffs Nr. 86 werden mit 97 Gewichtsteilen feinteiligem Kaolin vermischt. Man erhält auf diese Weise ein Stäubemittel, das 3 Gew.% des Wirkstoffs enthält.

VII. 30 Gewichtsteile des Wirkstoffs Nr. 7 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Gewichtsteile des Wirkstoffs Nr. 86 werden mit 2 Gewichtsteilen Calciumsalz der Dodecylbenzolsulfonsäure, 8 Gewichtsteilen Fettalkohol-polyglykolether, 2 Gewichtsteilen Natriumsalz eines Phenol-Harnstoff-Formaldehyd-Kondensates und 68 Gewichtsteilen eines paraffinischen Mineralöls innig vermischt. Man erhält eine stabile ölige Dispersion.

Die Applikation der herbiziden Mittel bzw. der Wirkstoffe kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Bekämpfungsziel, Jahreszeit, Zielpflanzen und Wachstumsstadium 0,001 bis 5,0, vorzugsweise 0,01 bis 2,0 kg/ha aktive Substanz (a.S.).

In Anbetracht der Vielseitigkeit der Applikationsmethoden können die Verbindungen Ia und Ib bzw. sie enthalende Mittel noch in einer weiteren Zahl von Kulturpflanzen zur Beseitigung unerwünschter Pflanzen eingesetzt werden. In Betracht kommen beispielsweise folgende Kulturen:

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Avena sativa | Hafer |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rüben |
| Camellia sinensis | Teestrauch |
| Carthamus tinctorius | Saflor - Färberdistel |
| Carya illinoinensis | Pekannußbaum |

| Botanischer Name | Deutscher Name |
|---|---|
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum, Gossypium herbaceum, Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lactuca sativa | Kopfsalat |
| Lens culinaris | Linse |
| Linum usitatissimum | Faserlein |
| Lycopersicon lycopersicum | Tomate |
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Panicum miliaceum | Rispenhirse |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |

| Botanischer Name | Deutscher Name |
|---|---|
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sesamum indicum | Sesam |
| Solanum tuberosum | Kartoffel |
| Sorghum bicolor (s. vulgare) | Mohrenhirse |
| Sorghum dochna | Zuckerhirse |
| Spinacia oleracea | Spinat |
| Theobroma cacao | Kakaobaum |
| Trifolium pratense | Rotklee |
| Triticum aestivum | Weizen |
| Triticum durum | Hartweizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die Pyrimido[5,4-e]-as-triazin-5,7(6H,8H)-dione Ia bzw. Ib mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate, Cyclohexan-1,3-dionderivate, Chinolincarbonsäurederivate, Aryloxy-, Heteroaryloxyphenoxypropionsäuren sowie deren Salze, Ester und Amide und andere in Betracht.

Außerdem kann es von Nutzen sein, die Verbindungen Ia bzw. Ib allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien.

Von Interesse ist ferner die Mischbarkeit mit Mineralsalzlösungen, welche zur Behebung von Ernährungs-und Spurenelementmängeln eingesetzt werden. Es können auch nichtphytotoxische Öle und Ölkonzentrate zugesetzt werden.

Anwendungsbeispiele

Die herbizide Wirkung der Pyrimido[5,4-e]-as-triazin-5,7(6H,8H)-dione der Formel Ia bzw. Ib ließ sich durch Gewächshausversuche zeigen:

Als Kulturgefäße dienten Plastikblumentöpfe (300 $cm^3$ Inhalt) mit lehmigem Sand mit etwa 3,0 % Humus als Substrat. Die Samen der Testpflanzen wurden nach Arten getrennt eingesät.

Bei Vorauflaufbehandlung wurden die in Wasser suspendierten oder emulgierten Wirkstoffe direkt nach Einsaat mittels fein verteilender Düsen aufgebracht. Die Gefäße wurden leicht beregnet, um Keimung und

Wachstum zu fördern und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die Wirkstoffe beeinträchtigt wurde.

Zum Zwecke der Nachauflaufbehandlung wurden die Testpflanzen je nach Wuchsform erst bei einer Wuchshöhe von 3 bis 15 cm mit den in Wasser suspendierten oder emulgierten Wirkstoffen behandelt. Die Aufwandmenge für die Nachauflaufbehandlung betrug 0,5 kg/ha a.S.

Die Pflanzen wurden artenspezifisch bei Temperaturen von 10-25 °C bzw. 20-35 °C gehalten. Die Versuchsperiode erstreckte sich über 2 bis 4 Wochen. Während dieser Zeit wurden die Pflanzen gepflegt und ihre Reaktion auf die einzelnen Behandlungen wurde ausgewertet.

Bewertet wurde nach einer Skala von 0 bis 100. Dabei bedeutet 100 kein Aufgang der Pflanzen bzw. völlige Zerstörung zumindest der oberirdischen Teile und 0 keine Schädigung oder normaler Wachstumsverlauf.

Die in den Gewächshausversuchen verwendeten Pflanzen setzten sich aus folgenden Arten zusammen:

| Botanischer Name | Deutscher Name |
|---|---|
| Amaranthus retroflexus | Zurückgekrümmter Fuchsschwanz |
| Chrysanthemum coronarium | Kronenwucherblume |
| Setaria italica | Ital. Raygras |
| Triticum aestivum | Sommerweizen |

Im Nachauflaufverfahren ließen sich mit den Verbindungen 28, 82 und 86 die breitblättrigen Pflanzen sehr gut bekämpfen. Für die Kultur Weizen zeigten die Verbindungen dagegen eine sehr gute Verträglichkeit.

## Patentansprüche

1. Verfahren zur Bekämpfung unerwünschten Pflanzenwuchses, dadurch gekennzeichnet, daß man ein herbizides Mittel, enthaltend als Wirkstoff ein Pyrimido[5,4-e]-as-triazin-5,7(6H,8H)-dion der allgemeinen Formel Ia

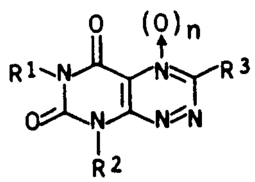

(Ia) ,

in der die Variablen folgende Bedeutung haben:

$R^1$, $R^2$
- Wasserstoff, $C_1$-$C_6$-Alkylgruppen, $C_3$-$C_6$-Cycloalkylgruppen, $C_2$-$C_8$-Alkenylgruppen, die Phenyl- oder die Benzylgruppe;

$R^3$
- Wasserstoff, Halogen, die Nitrogruppe, eine $C_1$-$C_8$-Alkylgruppe, die bis zu drei der folgenden Substituenten tragen kann:
  Halogen, Hydroxyl, $C_1$-$C_6$-Alkoxy, $C_1$-$C_6$-Alkyl, $C_1$-$C_4$-Alkoxy-$C_1$-$C_4$-alkoxy, $C_2$-$C_6$-Alkenyl, $C_1$-$C_6$-Alkylthio, Phenyl, Benzyl;
- eine $C_2$-$C_6$-Alkenyl- oder Phenylalkenylgruppe;
- eine $C_3$-$C_6$-Cycloalkylgruppe, die bis zu 3 $C_1$-$C_4$-Alkylgruppen als Substituenten tragen kann;
- einen 5- oder 6-gliedrigen C-organischen Heterocyclus, bei dem insgesamt bis zu zwei der Ringglieder, die nicht benachbart sein sollen, -O-, -S- oder -N($R^4$)-sein können, wobei $R^4$ für Wasserstoff oder eine $C_1$-$C_6$-Alkylgruppe steht;
- eine Gruppe -CO-$R^4$ oder -CO-O-$R^4$;
- die Phenylgruppe oder einen einkernigen Heteroarylrest, wobei diese Gruppen bis zu drei der folgenden Substituenten enthalten können: Halogen, Nitro, $C_1$-$C_6$-Alkyl, $C_2$-$C_6$-Alkenyl, $C_1$-$C_6$-Alkoxy oder eine Aminogruppe -$NR^4R^5$, wobei $R^5$ für einen der Reste $R^4$ steht;

- eine Gruppe $-ZR^6$, wobei
  Z für Sauerstoff, Schwefel oder die Gruppierung $-N(R^7)-$ steht und in der $R^6$ Wasserstoff, eine $C_1$-$C_6$-Alkylgruppe oder eine Phenyl- oder Benzylgruppe bedeutet, die bis zu drei der folgenden Substituenten am Kern tragen können:
  $C_1$-$C_6$-Alkyl, $C_1$-$C_6$-Alkoxy oder Halogen,
  und wobei
  $R^7$ Wasserstoff oder eine $C_1$-$C_6$-Alkylgruppe bedeutet, wobei $R^6$ und $R^7$ auch mit dem Stickstoffatom einen 5-oder 6-gliedrigen Ring bilden können, der durch Sauerstoff unterbrochen sein kann;

n 0 oder 1,

oder ein mineralsaures Salz von Ia.

**2.** Verfahren gemäß Anspruch 1, dadurch gekennzeichnet, daß man Pyrimido[5,4-e]-as-triazin-5,7(6H,8H)-dione der allgemeinen Formel Ib

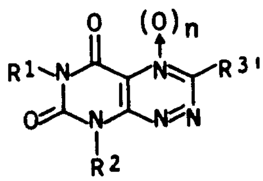

(Ib) ,

in der $R^1$ und $R^2$ die in Anspruch 1 genannte Bedeutung haben und

$R^{3'}$ eine der folgenden Bedeutungen hat,

- eine $C_1$-$C_8$-Alkylgruppe mit einem bis zwei der folgenden Substituenten: Halogen, Hydroxyl, $C_1$-$C_6$-Alkoxy,
  $C_1$-$C_4$-Alkoxy-$C_1$-$C_4$-alkoxy, $C_1$-$C_6$-Alkylthio,
- eine $C_3$-$C_6$-Cycloalkylgruppe, die bis zu 3 $C_1$-$C_4$-Alkylgruppen als Substituenten tragen kann;
- einen 5- oder 6-gliedrigen gesättigten Heterocyclus mit der Gruppierung $-N(R^4)-$ als Heterogruppierung, wobei $R^4$ für eine $C_1$-$C_6$-Alkylgruppe steht, oder mit zwei nicht benachbarten Heteroatomen, die Sauerstoff, Schwefel oder die Gruppierung $-N(R^4)-$ sein können;
- eine Gruppe $-CO-R^4$ oder $-CO-O-R^4$;
- einen einkernigen Heteroarylrest, der einen bis drei oder folgenden Substituenten enthält: Halogen, Nitro, $C_1$-$C_6$-Alkyl, $C_2$-$C_6$-Alkenyl, $C_1$-$C_6$-Alkoxy oder eine Aminogruppe $-NR^4R^5$, wobei $R^5$ für einen der Reste $R^4$ steht;
- eine $C_2$-$C_6$-Alkoxygruppe;
- eine Gruppe $-ZR^6$, wobei Z für Schwefel oder die Gruppierung $-N(R^7)-$ steht und in der $R^6$ Wasserstoff, eine $C_2$-$C_6$-Alkylgruppe oder eine Phenyl- oder Benzylgruppe bedeutet, die jede bis zu drei der folgenden Substituenten am Kern tragen kann: $C_1$-$C_6$-Alkyl, $C_1$-$C_6$-Alkoxy oder Halogen,
  und wobei $R^7$ eine $C_1$-$C_6$-Alkylgruppe bedeutet, und
  $R^6$ und $R^7$ auch mit dem Stickstoffatom einen 5- oder 6-gliedrigen Ring bilden können, der noch durch Sauerstoff unterbrochen sein kann,

sowie die mineralsauren Salze von Ib verwendet.

## Claims

**1.** A method of controlling undesirable plant growth, which comprises using a herbicide containing, as active ingredient, a pyrimido[5,4-e]-as-triazine-5,7(6H,8H)-dione of the general formula Ia

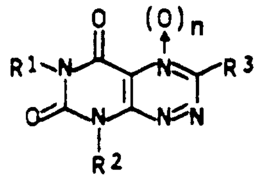 (Ia)

where
$R^1$ and $R^2$ are each hydrogen, $C_1$-$C_6$-alkyl, $C_3$-$C_6$-cycloalkyl, $C_2$-$C_8$-alkenyl, phenyl or benzyl;
$R^3$ is hydrogen, halogen, nitro, $C_1$-$C_6$-alkyl which may carry up to three of the following substituents: halogen, hydroxyl, $C_1$-$C_6$-alkoxy, $C_1$-$C_6$-alkyl, $C_1$-$C_4$-alkoxy-$C_1$-$C_4$-alkoxy, $C_2$-$C_6$-alkenyl, $C_1$-$C_6$-alkylthio, phenyl or benzyl;
$C_2$-$C_6$-alkenyl or phenylalkenyl;
$C_3$-$C_6$-cycloalkyl which may carry up to three $C_1$-$C_4$-alkyl groups as substituents;
a 5-membered or 6-membered C-organic heterocyclic structure in which not more than two of the ring members, which should not be adjacent to one another, may be -O-, -S- or -N($R^4$)-, where $R^4$ is hydrogen or $C_1$-$C_6$-alkyl;
-CO-$R^4$ or -CO-O-$R^4$;
phenyl or a mononuclear hetaryl radical, where these groups may contain up to three of the following substituents: halogen, nitro, $C_1$-$C_6$-alkyl, $C_2$-$C_6$-alkenyl, $C_1$-$C_6$-alkoxy or an amino group -N$R^4R^5$, where $R^5$ is one of the radicals $R^4$;
-Z$R^6$, where Z is oxygen, sulfur or a group -N($R^7$)- and $R^6$is hydrogen, $C_1$-$C_6$-alkyl or a phenyl or benzyl group which may carry up to three of the following substituents on the nucleus: $C_1$-$C_6$-alkyl, $C_1$-$C_6$-alkoxy or halogen, and where $R^7$ is hydrogen or $C_1$-$C_6$-alkyl, and $R^6$ and $R^7$ together with the nitrogen atom may furthermore form a 5-membered or 6-membered ring which may be interrupted by oxygen and n is 0 or 1,
or a salt of Ia with a mineral acid.

**2.** A method as claimed in claim 1, which comprises using a pyrimido[5,4-e]-as-triazin-5,7(6H,8H)-dione of the general formula Ib

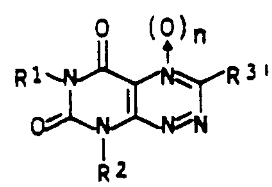 (Ib)

where $R^1$ and $R^2$ have the meanings stated in claim 1 and where
$R^{3'}$ is $C_1$-$C_8$-alkyl having one or two of the following substituents: halogen,m hydroxyl, $C_1$-$C_6$-alkoxy, $C_1$-$C_4$-alkoxy-$C_1$-$C_4$-alkoxy or $C_1$-$C_6$-alkylthio;
$C_3$-$C_6$-cycloalkyl which may carry up to three $C_1$-$C_4$-alkyl groups as substituents;
a 5-membered or 6-membered saturated heterocyclic structure having the group -N($R^4$)- as a hetero group, where $R^4$ is $C_1$-$C_6$-alkyl, or having two non-adjacent hetero atoms, which may be oxygen, sulfur or a group -N($R^4$)-;
-CO-$R^4$ or -CO-O-$R^4$;
a mononuclear hetaryl radical which contains from one to three of the following substituents: halogen, nitro, $C_1$-$C_6$-alkyl, $C_2$-$C_6$-alkenyl, $C_1$-$C_6$-alkoxy or an amino group -N$R^4R^5$, where $R^5$ is one of the radicals $R^4$;
$C_2$-$C_6$-alkoxy;
-Z$R^6$, where Z is oxygen, sulfur or a group -N($R^7$)- and $R^6$ is hydrogen, $C_2$-$C_6$-alkyl or a phenyl or benzyl group, each of which may carry up to three of the following substituents on the nucleus: $C_1$-$C_6$-alkyl, $C_1$-$C_6$-alkoxy or halogen,
and where $R^7$ is $C_1$-$C_6$-alkyl, and
$R^6$ and $R^7$ together with the nitrogen atom may furthermore form a 5-membered or 6-membered ring which may also be interrupted by oxygen,
or a salt of Ib with a mineral acid.

**Revendications**

1. Procédé pour lutter contre la croissance de plantes indésirables, caractérisé par le fait que l'on utilise un herbicide contenant comme principe actif une pyrimido[5,4-e]-as-triazine-5,7(6H, 8H)dione de la formule générale la

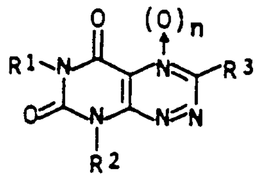

(Ia) ,

dans laquelle les variables ont la signification suivante :

$R^1$, $R^2$
- hydrogène, groupes alkyle en C1-C6, groupes cycloalkyle en C3-C6, groupes alcényle en C2-C8, les groupes phényle ou benzyle.

$R^3$
- hydrogène, halogène, les groupes nitro, un groupe alkyle en C1-C8 qui peut porter jusqu'à trois des substituants suivants : halogène, hydroxyle, alcoxy en C1-C6, alkyle en C1-C6, alcoxy en C1-C4 - alcoxy en C1-C4, alcényle en C2-C6, [alkyle en C1-C6]-thio, phényle, benzyle ;
- un groupe alcényle ou phénylalcényle en C2-C6
- un groupe cycloalkyle en C3-C6, qui peut porter jusqu'à trois groupes alkyle en C1-C4, comme substituants
- un hétérocycle organique à 5 ou 6 chaînons, pour lequel au total jusqu'à deux des éléments du cycle, qui ne doivent pas être voisins, peuvent être -O-, -S- ou -N($R^4$)-, $R^4$ étant mis pour hydrogène ou un groupe alkyle en C1-C6
- un groupe -CO-$R^4$ ou -CO-O-$R^4$
- le groupe phényle ou un reste hétéroaryle à un noyau, ces groupes pouvant contenir jusqu'à trois des substituants suivants : halogène, nitro, alkyle en C1-C6 alcényle en C2-C6, alcoxy en C1-C6 ou un groupe amino -N$R^4R^5$, $R^5$ étant mis pour un des restes $R^4$
- un groupe -Z$R^6$, Z étant mis pour oxygène, soufre ou le groupement -N($R^7$) et dans lequel $R^6$ signifie hydrogène, un groupe alkyle en C1-C6 ou un groupe phényle ou benzyle, qui peuvent porter sur le noyau jusqu'à trois des substituants suivants : alkyle en C1-C6, alcoxy en C1-C6 ou halogène et $R^7$ signifiant hydrogène ou un groupe alkyle en C1-C6, $R^6$ et $R^7$ pouvant former aussi avec l'atome d'azote un cycle à 5 ou 6 chaînons, qui peut être interrompu par oxygène.

n - 0 ou 1

ou un sel d'acide minéral de la

2. Procédé selon la revendication 1, caractérisé par le fait que l'on utilise une pyrimido[5,4-e]-al-triazine-5,7(6H,8H)dione de la formule générale Ib

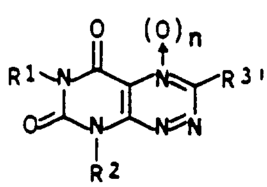

(Ib) ,

dans laquelle $R^1$ et $R^2$ ont la signification indiquée dans la revendication 1, et

$R^{3'}$ a l'une des significations suivantes:
- un groupe alkyle en C1-C8 avec un jusqu'à deux des substituants suivants : halogène, hydroxyle, alcoxy en C1-C6, alcoxy en C1-C4-alcoxy en C1-C4, [alkyle en C1-C6]-thio

- un groupe cycloalkyle en C3-C6, qui peut porter jusqu'à 3 groupes en C1-C4 comme substituants
- un hétérocycle saturé à 5 ou 6 chaînons, avec le groupement -N($R^4$) comme groupement hétéro, $R^4$ étant mis pour un groupe alkyle en C1-C6 ou avec deux hétéroatomes non voisins, qui peuvent être oxygène, soufre ou le groupement -N($R^4$) ;
- un groupe -CO-$R^4$ ou -CO-O-$R^4$
- un reste hétéroaryle à un noyau qui contient un à trois des substituants suivants : halogène, nitro, alkyle en C1-C6, alcényle en C2-C6, alcoxy en C1-C6 ou un groupe amino -N$R^4R^5$, $R^5$ étant mis pour un des restes $R^4$,
- un groupe alcoxy en C2-C6
- un groupe -Z$R^6$, Z étant mis pour soufre ou le groupement -N($R^7$)- et dans lequel $R^6$ signifie hydrogène, un groupe alkyle en C2-C6 ou un groupe phényle ou benzyle, qui peut chacune porter sur le noyau jusqu'à trois des substituants suivants : alkyle en C1-C6, alcoxy en C1-C6 ou halogène et $R^7$ signifiant un groupe alkyle en C1-C6 et $R^6$ et $R^7$ pouvant aussi former avec l'atome d'azote un cycle à 5 ou 6 chaînons, qui peut encore être interrompu par oxygène

ainsi que les sels d'acides minéraux de Ib.